Europäisches Patentamt

European Patent Office

Office européen des brevets

(11) Publication number: **0 392 816 A2**

# EUROPEAN PATENT APPLICATION

(21) Application number: **90303892.5**

(22) Date of filing: **11.04.90**

(51) Int. Cl.5: **H04M 11/06**

(30) Priority: **11.04.89 US 336173**

(43) Date of publication of application:
**17.10.90 Bulletin 90/42**

(84) Designated Contracting States:
**AT BE CH DE DK ES FR GB IT LI LU NL SE**

(71) Applicant: **Universal Data Systems, Inc.**
**5000 Bradford Drive**
**Huntsville Alabama 35805(US)**

(72) Inventor: **Aldridge, Timothy W.**
**Rte. 1 Box 781**
**Somerville, Alabama 35670(US)**

(74) Representative: **Dunlop, Hugh Christopher et al**
**Motorola European Intellectual Property**
**Operations Jays Close Viables Industrial Estate**
**Basingstoke, Hampshire RG22 4PD(GB)**

(54) **Modem voice/data mode switching arrangement.**

(57) A modem voice/data mode switching arrangement is disclosed whereby a modem automatically switches between a voice mode and a data mode without the modem user being required to perform any manual triggering step or act. According to the invention, once a voice-mode connection with another modem has been established, the modem monitors for the presence of a predetermined answer-back tone on the line and, in response, switches to the data mode. Having switched to the data mode, the modem monitors for the loss of data carrier on the line and, in response, switches back to the voice mode. Thus arranged, the modem can automatically switch between the voice and data modes while communicating with any other modem that uses a compatible data carrier and the conventional ABT.

*FIG.1*

EP 0 392 816 A2

## MODEM VOICE/DATA MODE SWITCHING ARRANGEMENT

Technical Field

This invention pertains generally to modems or data communication equipment (DCE) with voice and data modes and more specifically to a method for such a modem to switch between the voice and data modes.

Background of the Invention

Modems or DCE with voice and data modes are available. It is common for two such modems to exchange data via a switched voice connection provided by a public switched telephone network (PSTN) or other dial network. With this arrangement, the user of one modem first places a voice-mode telephone call to the PSTN access line associated with the other modem. Here the modem that originates the telephone call is known as the originate or originating modem and the modem that answers the telephone call is known as the answer or answering modem.

A typical sequence is as follows: With the modem in the voice mode, the originating user goes off hook on a telephone set associated with the modem and dials the PSTN address digits corresponding to the answer modem access line. The user then remains on the line to verify that the PSTN connection has been established. The originating user next verifies that the answer modem responds with a predetermined answer-back tone (ABT) to confirm that it is ready to exchange data. At this point, the originating user switches his modem from the voice mode to the data mode.

This foregoing step of switching the modem to the data mode has sometimes been triggered by the user activating a "voice/data" mode control switch associated with the modem. Alternatively, this voice-to-data-mode switching has sometimes been activated by the user keying a predetermined command into his associated personal computer or other data terminal equipment (DTE), thereby causing the DTE, in turn, to switch the modem to the data mode. In either case, however, once he hears ABT, the originating user has been required to take some form of positive action to cause the modem to switch from the voice to the data mode.

After the originate modem switches to the data mode, the answer modem transmits a data carrier signal compatible with the originate modem. The modems then exchange data.

As data communications become increasingly common in today's society, increasing numbers of non-technical users will be required to utilize modems in their everyday life. Moreover, increasing numbers of such users will be required to perform a sequence of steps similar to above. It is likely, therefore, that many of these novice users won't understand the modem voice and data modes ånd, as a result, will experience problems in operating the voice/data mode switch. This, in turn, could cause still further problems such as, for example, inadvertently dropping the PSTN connection.

Summary of the Invention

It is an object of the present invention to provide an improved method for a modem to switch between the voice mode and the data mode. Accordingly, a modem voice/data mode switching arrangement is disclosed whereby a modem switches between a voice mode and a data mode without the modem user being required to perform any manual triggering step or act. Once a voice-mode connection with another modem has been established, the modem monitors for the presence of a predetermined answer-back tone on the line and, in response, switches to the data mode. Having switched to the data mode, the modem monitors for the loss of data carrier on the line and, in response, switches back to the voice mode. Thus arranged, the modem can switch between the voice and data modes while communicating with any other modem that uses a compatible data carrier and the conventional ABT.

One advantage of the modem voice/data mode switching arrangement, according to the present invention, is that it allows the user to operate a modem without being required to manually control the modem's voice/data mode. Therefore, once the initial voice-mode connection has been established, the user perceives the modem's switching between the voice and data modes as being automatic and hands-free.

Brief Description of the Drawings

Fig. 1 is a block diagram that shows a first embodiment of a modem voice/data mode switching arrangement, according to the invention.

Fig. 2 is an exemplary flow diagram for a modem voice/data mode switching arrangement, according to the invention.

Detailed Description of the Invention

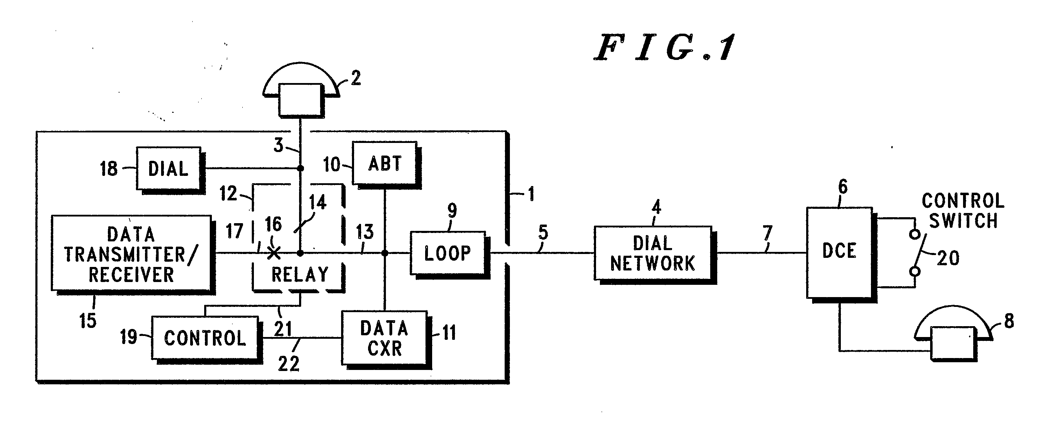

Fig. 1 is a block diagram that shows a first embodiment of a modem voice/data mode switching arrangement, according to the invention. Referring now to Fig. 1, there is shown a DCE 1 arranged with a telephone set 2 via local talk line 3 and connected to a dial network 4 by a line 5. Also shown is a DCE 6 connected to the dial network 4 by a line 7. The DCE 6 is connected with a telephone set 8. It will be appreciated that DCE 6 may be any modem that utilizes the conventional ABT and a data carrier signal and protocol compatible with DCE 1. The line 5 is connected to a loop current detector 9. The loop current detector 9 is further connected to an ABT detector 10, a data carrier detector 11, and a data relay 12 by means of channel 13.

The data relay 12 is a two-position relay having a normal (or de-energized) state and an operated (or energized) state. In the normal state, data relay 12 connects the loop detector 9, ABT detector 10, and data carrier detector 11 to the local talk line 3 via break contact 14. Conversely, when data relay 12 is operated, it connects the loop detector 9, ABT detector 10, and data carrier detector 11 to a data transmit and receive circuit 15 via make contact 16 and channel 17. An automatic dialer 18 is connected in parallel with the telephone set 2. Further, loop detector 9, ABT detector 10, data carrier detector 11, data relay 12, data transmit and receive circuit 15, and automatic dialer 18 are arranged for control by DCE 1 common control 19. The DCE 1 common control 19 may be any convenient control means such as, for example, a suitably-programmed microprocessor. Common control 19 is coupled to relay 12 via channel 21. Also, control 19 is coupled to data carrier detector 11 via channel 22.

An example of operation in accord with the present invention follows:

Assuming the user of DCE 1 wishes to establish a connection with DCE 6, the DCE 1 user goes off hook on telephone set 2. In response, loop detector 9 detects loop current in line 5 and communicates this to the DCE 1 common control 19. Responsive to this off hook state, the common control 19 causes the autodialer 18 to output the desired dial network address signals to the dial network 4 by means of local talk line 3, break contact 14, channel 13, loop detector 9, and line 5. These address signals may be, for example, suitable "touch tone" DTMF-type signals that correspond to the dial network address of line 7.

Responsive to the address signals, the dial network 4 now acts to connect line 5 to line 7, as is known in the prior art. The dial network then applies ringing current to line 7, the DCE 6 and telephone set 8 being suitably arranged to alert the user of DCE 6 of the incoming call. The user of DCE 6 now answers the call, thereby establishing a voice-mode connection with the user of DCE 1 via line 7, dial network 4, line 5, loop detector 9, channel 13, break contact 14, local talk line 3, and telephone set 2.

The parties now converse. Assuming the user of DCE 6 now wishes to transmit data to DCE 1, the user switches DCE 6 to the data mode by any convenient means such as, for example, a suitable voice/data mode control switch 20. DCE 6 now transmits ABT to the ABT detector 10 of DCE 1 via line 7, dial network 4, line 5, loop detector 9, and channel 13.

Upon detecting the presence of ABT, detector 10 informs the common control 19 that ABT has been received. In response, common control 19 now places DCE 1 into the data mode by energizing data relay 12, thereby causing break contact 14 to open-circuit and make contact 16 to short-circuit, thereby connecting channel 13 to the data transmit and receive circuit 15 via channel 17. In this state, DCE 6 is connected to the data transmit and receive circuit 15 of DCE 1 via line 7, the dial network 4, line 5, loop detector 9, channel 13, make contact 16 and channel 17.

As part of the data exchange, DCE 6 transmits a data carrier signal to DCE 1 that is detected by data carrier detector 11 which, in turn, informs the common control 19 that data carrier is present.

At the termination of the data exchange, DCE 6 ceases transmitting data carrier signal to DCE 1. As a result, the data carrier detector 11 now detects this loss of data carrier signal and, in turn, informs the common control 19. In response, the common control 19 now restores DCE 1 to the voice mode by releasing the data relay 12. At this point, the data relay 12 is in the normal (de-energized) state and telephone set 2 is again connected to line 5.

At this point, the parties may converse again and decide whether they desire additional exchanges of data or whether they wish to disconnect. If they desire additional exchanges of data, the second user will again cause DCE 6 to send ABT to DCE 1 and operation will proceed as before.

If the parties wish to disconnect, they will go on-hook on their respective telephone sets, thereby signaling dial network 4 to disconnect the previously-established connection between line 5 and line 7, as is known in the prior art.

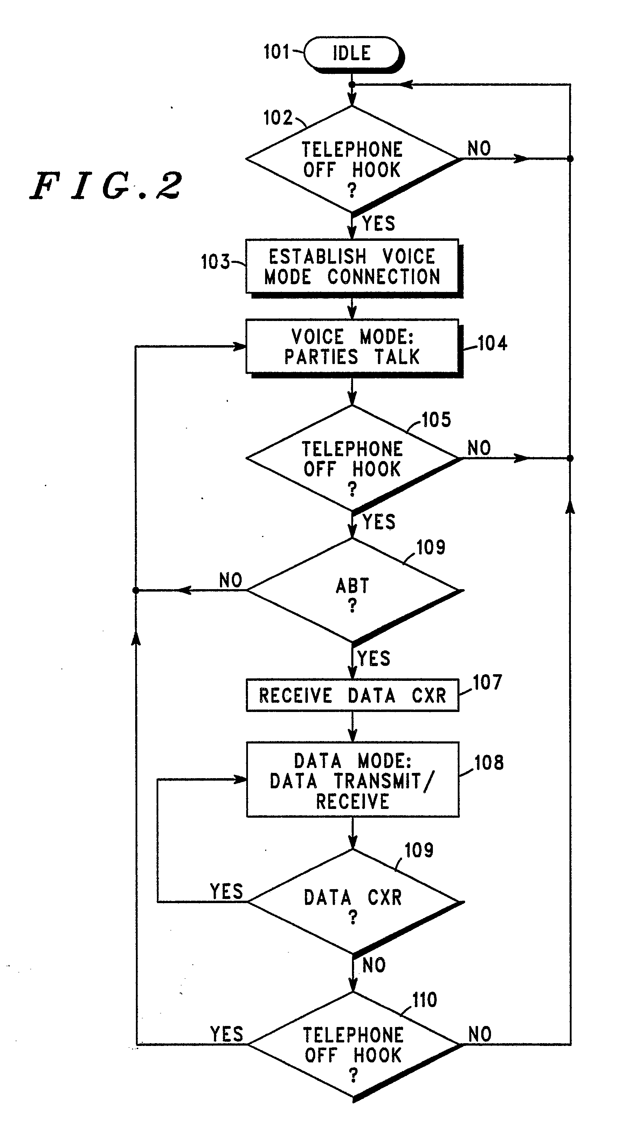

Fig. 2 is an exemplary flow diagram for a DCE embodying the modem voice/data mode switching arrangement, according to the invention. This flow diagram generally corresponds to the steps of DCE 1 described above. As above, it will be assumed that the DCE uses a dial network such as a PSTN to establish a voice connection with a desired other DCE.

The process begins with the DCE in the idle state, step 101. In the idle state (step 101), the DCE continues to determine whether its associated telephone set is off hook, step 102. If this off-hook determination (step 102) is negative, the DCE returns to the idle state, step 101. If the answer here (step 102) is affirmative, however, the DCE proceeds to establish a voice-mode connection with the other DCE, step 103. The DCE may use any convenient method such as, for example, by using an automatic dialer to signal the dial network with the address corresponding to the other DCE.

The DCE now proceeds to the voice mode, step 104. The parties now converse.

During the voice mode (step 104), the DCE continues to determine whether its telephone set is off hook, step 105. If this off-hook determination (step 105) is negative, the DCE returns to the idle state, step 101. If the answer here (step 105) is affirmative, however, the DCE then proceeds to determine whether ABT has been received, step 106.

If this ABT determination (step 106) is negative, the DCE remains in the voice mode, step 104. If the answer here (step 106) is affirmative, however, the DCE then waits to receive data carrier, step 107.

Upon receipt of data carrier (step 107), the DCE goes to the data mode, step 108. The two DCE units now exchange data.

While the DCE is in the data mode (step 108), it continues to determine whether data carrier is present , step 109. If this data carrier determination (step 109) is affirmative, the DCE remains in the data mode, step 108. If the answer here (step 109) is negative, however, then the two DCE units presently have ceased exchanging data, and the DCE then proceeds to determine whether its telephone set remains off hook, step 110.

If this off-hook determination (step 110) is affirmative, then this is an indication that the parties desire to converse further and, accordingly, the DCE returns to the voice mode, step 104. If the answer here (step 110) is negative, however, then this is an indication that the parties desire to disconnect and, accordingly, the DCE returns to the idle state, step 101.

While the modem voice/data mode switching arrangement, according to the present invention, has been described above as being useful with a modem arranged for coupling to another modem by means of a dial network such as the PSTN, it will be appreciated that the invention is equally useful with a modem arranged for coupling to another modem by any convenient coupling means, switched or non-switched, private or public. For instance, the modem voice/data mode switching arrangement, according to the invention, may be used with a modem arranged for coupling to another modem by means of a dedicated private line link. Also, the modem voice/data mode switching arrangement, according to the invention, may be used with a modem arranged for coupling to another modem by means of a private (non-public) telephone network, such as a PBX.

As has been discussed, one advantage of the invention is that it allows the user to engage in successive voice-mode and data-mode sessions without being required to touch the modem. In this sense the user perceives the transitions between the voice and data modes as being hands-free and automatic. Also, the use of the standard ABT signal allows a modem according to the present invention to communicate with any conventional modem using a compatible data carrier and protocol.

This feature could be very advantageous for a department store marketing application as, for example, where a merchandise sales display is arranged with an originating modem, telephone set and data terminal. The sales display, in turn, could be arranged to encourage an interested shopper to go off-hook on the telephone set. The originating modem, of course, would be connected to an in-house dial network such as a PBX, and would initially be in the voice mode. Further, when the user goes off-hook, the modem would be arranged to automatically dial the PBX extension corresponding to a customer-assistance attendant line. The attendant line, in turn, would be arranged with a compatible answering modem, telephone set, and data terminal. With this arrangement, when the shopper goes off-hook, he would be automatically connected to the attendant, who would then ask the shopper whether he desired further product information.

Assuming the shopper desired further information, the sales attendant would then place his answering modem into the data mode and, accordingly, transmit ABT to the shoppers originating modem, thereby causing it to go to the data mode. The attendant would then transmit the desired information to the shopper via the sales-display data terminal. After receiving the information, the shopper's originating modem would automatically return to the voice mode, in response to the loss of data carrier from the attendant's answering modem. At this point, the attendant would ask the shopper whether he desired to receive further information or place an order.

The advantage here is, of course, that the merchandise display arrangement, as described above, has been made "user friendly" from the point of view of the shopper. This is because the shopper is now able to use the originating modem to send and receive data to the attendant without having to manually switch the originating modem from the voice to the data mode. The natural result of the display arrangement being user-friendly is, of course, that more shoppers ultimately will be encouraged to utilize the display arrangement, thereby generating more sales orders.

While various embodiments of the modem voice/data mode switching arrangement, according to the invention, have been described hereinabove, the scope of the invention is defined by the following claims.

**Claims**

1. A modem having a voice and a data mode and arranged for coupling to a channel, said modem having switching means for switching from said voice mode to said data mode, comprising:
means for determining when a predetermined signal is present on said channel;
means responsive to said determining means for switching to said data mode upon said signal being present.

2. A modem having a voice and a data mode and arranged for coupling to a channel, said modem having switching means for switching from said data mode to said voice mode, comprising:
means for determining when a predetermined data carrier signal is present on said channel during said data mode and for determining when there is a substantial loss of data carrier on said channel;
means responsive to said determining means for switching from said data mode to said voice mode upon said loss of carrier being detected.

3. A data communication system comprising a first modem in accordance with claim 1 coupled to a second modem,
said· second modem having means for sending a predetermined tone to said first modem, and
said first modem having switching means for switching from said voice mode to said data mode, said switching means including means for receiving said predetermined tone, and means responsive to said receiving means for switching to said data mode upon detection of said tone.

4. A data communications system comprising a first modem in accordance with claim 2 coupled to a second modem, said second modem having:
sending means for sending a data carrier to said first modem;
means responsive to said sending means for decreasing the level of said data carrier sent to said first modem to substantially zero, thereby causing a loss of data carrier;
said first modem having switching means for switching from said data mode to said voice mode, comprising:

means for detecting said loss of data carrier;
means responsive to said detecting means for switching to said voice mode.

5. A data communications system comprising:
a first modem in accordance with claim 3 coupled to second modem, in accordance with claim 4.

6. A modem in accordance with claims 1 and 2 comprising:
determining means for determining when a predetermined signal is present on said channel;
means responsive to said determining means for switching to said data mode upon detection of said predetermined signal;
said modem having second means for switching from said data mode to said voice mode, comprising:
determining means for determining when there is a loss of a predetermined data carrier on said channel;
means responsive to said determining means for switching to said voice mode upon detection of said loss of said predetermined data carrier on said channel.

7. A modem in accordance with claims 1 and 2 suited for coupling to a telephone set and to a telephone network by means of a line, comprising:
loop-current means for determining when said telephone set goes from on hook to off hook;
means responsive to said telephone set determining means for applying at least one predetermined address signal to said line upon determining said off-hook condition;
said modem having first means for switching from a voice mode to a data mode, including means for determining when a predetermined signal is present on said line, means responsive to said signal determining means for switching to said data mode;
said modem having second means for switching from said data mode to said voice mode, including means for determining when a predetermined data carrier signal is present on said line and for determining when there is a substantial loss data carrier on said line, and means responsive to said carrier determining means for switching from said data mode to said voice mode upon detection of loss of carrier.

8. The modem of claim 7 wherein said telephone set determining means includes means for determining when loop current is present in said line.

*FIG.1*

CONTROL SWITCH

8

20

DCE 6

7

DIAL NETWORK 4

5

1

LOOP 9

ABT 10

DATA CXR 11

13

2

3

RELAY 14

16

12

17

DIAL 18

DATA TRANSMITTER/ RECEIVER 15

CONTROL 19

21

22

FIG.2